(19) Europäisches Patentamt
European Patent Office
Office européen des brevets

(11) **EP 3 021 048 B1**

(12) **EUROPÄISCHE PATENTSCHRIFT**

(45) Veröffentlichungstag und Bekanntmachung des Hinweises auf die Patenterteilung:
**01.01.2020   Patentblatt 2020/01**

(21) Anmeldenummer: **15003200.1**

(22) Anmeldetag: **09.11.2015**

(51) Int Cl.:
*F24D 3/12* *(2006.01)*          *F24D 13/02* *(2006.01)*
*F16L 53/00* *(2018.01)*          *E04B 1/76* *(2006.01)*
*E04B 1/70* *(2006.01)*

(54) **TROCKNUNGSSYSTEM**

DRYING SYSTEM

SYSTEME DE SECHAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2014   DE 102014016673**

(43) Veröffentlichungstag der Anmeldung:
**18.05.2016   Patentblatt 2016/20**

(73) Patentinhaber: **Blümel, Christoph**
**84431 Heldenstein (DE)**

(72) Erfinder: **Blümel, Christoph**
**84431 Heldenstein (DE)**

(74) Vertreter: **Naessens, Stephan et al**
**Patentanwaltskanzlei Stephan Naessens**
**Nonntal 17**
**83471 Berchtesgaden (DE)**

(56) Entgegenhaltungen:
EP-A2- 0 743 492          CH-A- 220 459
DE-A1- 2 000 533          DE-A1- 4 008 604
DE-A1-102004 050 207      DE-A1-102005 002 571
DE-A1-102010 052 294      DE-C- 586 820
DE-U- 1 806 709           JP-A- H08 312 976
KR-B1- 100 866 995        US-A- 5 022 459

**Beschreibung**

Die Erfindung betrifft ein Trocknungssystem.

Bekannt sind Systeme wie zum Beispiel von Großeschmidt. Diese Systeme werden als Hüllflächentemperierungen - Bauteiltemperierung bezeichnet, sie werden an das bestehende Heizungssystem angeschlossen (Öl-, Gas-, Holz- Wärmepumpe).

Außerdem gibt es zum Beispiel Anwendungen (wie Konrad Fischer), wo beispielsweise Heizkabel an betroffene feuchte Bauteile offen oder eingeputzt an der Wand, der Außenwand verlegt werden.

Aus der Druckschrift DE 40 08 604 A1 ist eine Vorrichtung zum Trockenhalten einer Mauer bekannt. Die Vorrichtung umfasst mindestens einen elektrischen Heizwiderstand, welcher in Bohrungen des Mauerwerks eingesetzt ist, wobei die Bohrungen bis zur Außenseite der Mauer durchgehen. In den Bohrungen sind gelochte Röhren eingebracht. In die gelochten Röhren kann die Feuchtigkeit aus dem Mauerwerk einströmen und von dem durch den Heizdraht erzeugten Luftstrom nach außen abgeführt werden.

Aus der Druckschrift DE 10 2010 052 294 A1 ist ein Verfahren zum Entfeuchten eines Mauerwerkes von Gebäuden bekannt, bei dem in das durchfeuchtete Mauerwerk eine Vielzahl und im Abstand voneinander angeordnete Bohrlöcher eingebracht werden, welche öffnungsseitig über Anschlussschläuche zur Aufnahme und dem durch Sogwirkung unterstützten Weitertransport der aus den durchfeuchteten Mauerabschnitten in die Bohrlöcher eintretende Feuchtluft mit einem endseitig offenen Verbundrohr in Verbindung stehen, sodass der Luftstrom mit der Feuchtigkeit nach außen abgeführt werden kann. Die Sogwirkung wird durch den Anschluss des Verbundrohres an einen Gebäudekamin realisiert.

Aus der Druckschrift DE 18 06 709 U ist eine Mauertrocknungsanordnung bekannt, welche Belüftungsrohre in einem Mauerwerk aufweist, denen eine elektrische Heizeinrichtung zugeordnet ist. Auf diese Weise kann die in die Belüftungsrohre eintretende Feuchtigkeit in die Umgebung abgeführt werden.

Aufgabe der Erfindung ist es, den Stand der Technik zu verbessern und insbesondere ein Trocknungssystem zur Verfügung zu stellen, das einfach in jedem Gebäude zu installieren ist und wenig Energie verbraucht.

Diese Aufgabe wird erfindungsgemäß durch die Merkmale des Patentanspruches 1 gelöst.

Zum Beispiel in einem Einfamilienhaus oder Wohnung mit einer Deckenhöhe von 2,50 m bis 3 m verläuft, vorzugsweise ab 2 cm über Oberkante Fußboden, ein Rohr, in dem die ohmsche Heizung und eine wärmeleitende Flüssigkeit enthalten ist, wobei das Rohr vorzugsweise ein Kupferrohr mit einem Durchmesser von vorzugsweise 10 mm bis 30 mm, also vorzugsweise 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, bevorzugt 15 mm bis 25 mm, besonders bevorzugt 20 bis 25 mm, ganz besonders bevorzugt ein handelsübliches 22 mm Rohr ist. Das Rohr kann eine Länge von vorzugsweise 1 m bis 20 m, also vorzugsweise 1 m, 2 m, 3 m, 4 m, 5 m , 6 m, 7 m, 8 m, 9 m, 10 m, 11 m, 12 m, 13 m, 14 m, 15 m, 16 m, 17 m, 18 m, 19 m, 20 m, bevorzugt 1 m bis 10 m, besonders bevorzugt 1 m bis 5 m aufweisen.

Dieses System kann auch unterhalb eines Fensters oder eines Glaselements verlaufen. Das Rohr ist vorzugsweise ein in sich geschlossenes System aus einem einzigen Rohr, das wie oben beschrieben unterschiedliche Länge aufweisen kann. Das Rohr ist vorzugsweise ein gerades Rohr, das auch Krümmungen aufweisen kann.

Dieses erste Rohr dient vorzugsweise als Heizung, wenn es unverputzt frei liegt. Wenn das erste Rohr sich innerhalb des Mauerwerks befindet, aber vorzugsweise nicht verputzt ist, dient es der Mauertrocknung, da es die kapillarführende Schicht in der Mauer unterbricht. In dieser Form wird das Rohr nur zur Trocknung verwendet und kann auch in Ländern, in denen an sich keine Heizung benötigt wird, z.B. in Ländern, in denen normalerweise keine Heizung vorhanden ist, wie in den Tropen eingesetzt werden. (Südeuropäischen Ländern) . Bevorzugt weist dieses erste Rohr auch Fortsätze auf, wobei die Fortsätze in Form von Hülsen, Rohren, die vorzugsweise hohl sind, die in Wärmeverbindung zum ersten Rohr stehen und in das Mauerwerk, ähnlich einem Dübel, herein ragen. Diese Fortsätze sind vorzugsweise aus dem gleichen Material wie das Rohr, das aus einem wärmeleitenden Metall wie vorzugsweise Aluminium, Stahl, Kupfer, bevorzugt Kupfer ist. Diese Fortsätze sind vorzugsweise alle 20 cm bis 45 cm, also vorzugsweise 20 cm, 21 cm, 22 cm, 23 cm, 24 cm, 25 cm, 26 cm, 27 cm, 28 cm, 29 cm, 30 cm, 31 cm, 32 cm, 33 cm, 34 cm, 35 cm, 36 cm, 37 cm, 38 cm, 39 cm, 40 cm, 41 cm, 42 cm, 43 cm, 44 cm, 45 cm vorzugsweise vorhanden und vorzugsweise 1 cm bis 10 cm, also vorzugsweise 1 cm, 2 cm, 3 cm, 4 cm, 5 cm, 6 cm, 7 cm, 8 cm, 9 cm, 10 cm lang, bevorzugt 3, 4, 5, 6 cm lang und haben einen Durchmesser von vorzugsweise 3 mm bis 15 mm, also vorzugsweise 3 mm, 4 mm, 5 mm, 6 mm, 7 mm, 8 mm, 9 mm, 10 mm, 11 mm, 12 mm, 13 mm, 14 mm, 15 mm, bevorzugt 8 mm. Auf Grund der erfindungsgemäßen Fortsätze muss das erste Rohr sich nicht mehr innerhalb des Mauerwerks befinden, da die erfindungsgemäßen Fortsätze einfacher der Mauertrocknung dienen, da sich nun nur noch die Fortsätze innerhalb des Mauerwerks befinden müssen, wozu eine einfache Bohrung in das Mauerwerk genügt, um so die kapillarführende Schicht in der Mauer zu unterbrechen. In dieser Form wird das Rohr mit den erfindungsgemäßen wärmeleitenden Fortsätze vorzugsweise zur Trocknung verwendet.

An das erste einzige vorzugsweise gerade Rohr, das einen Heizdraht in Form einer ohmschen Heizung und eine wärmeleitende Flüssigkeit aufweist, kann ein weiteres zweites vorzugsweise gerades Rohr parallel über zumindest zwei Verbindungsrohre (pro laufenden Meter) angeschlossen sein, das ebenfalls einen Heizdraht in Form einer ohmschen Heizung und eine wärmeleitende Flüssigkeit aufweist. Diese zwei Rohre bilden ein Wärmerzeugungssystem, wie vorzugsweise ein Heiz-, Trocknungssystem. Dieses Heizsystem mit zwei parallelen Rohren, die vorzugsweise über T-Stücke, die in einem vorzugsweise 90° Winkel zu dem jeweiligen Rohr stehen, das sie verbindet, können auch als Fensterelementheizung verwendet werden, also unterhalb einer Glasscheibe angebracht sein, z.B. auf dem Fensterbrett unterhalb einer Fensterscheibe liegt. Vorzugsweise kann das T- Stück auch fehlen, indem durch das erste Rohr vorzugsweise vollständig eine Bohrung geht (vorzugsweise falls die beiden Rohre bereits miteinander verbunden, vorzugsweise verlötet sind), wobei diese Bohrung sich beim zweiten Rohr nur durch eine Wand fortsetzt, so dass die beiden Rohre in Flüssigkeitsverbindung, Gasverbindung stehen, wobei alle Bohrungen nach Außen flüssigkeitsdicht und gasdicht verlötet sind, so dass keine Flüssigkeit, Gas, Dampf durch die Bohrungen nach außen dringen kann, d.h. dass sich jeweils eine Bohrung eines jeden Rohrs Bohrung auf Bohrung berührt und so die beiden Rohre durch die Bohrungen in Verbindung stehen und Flüssigkeit, Gas, Dampf von einem Rohr ins andere gelangen können. Vorzugsweise reicht jeweils eine Bohrung in jeweils einem der Rohre, die zur Deckung gebracht werden können, um so eine Verbindung, Flüssigkeitsverbindung, Gasverbindung, zwischen den beiden Rohren herzustellen, wobei die beiden Bohrungen, die in Deckung gebracht sind, an ihren Rändern nach außen abgedichtet werden, vorzugsweise durch Lot abgedichtet werden, wobei die Bohrungen auf keinen Fall zugelötet werden dürfen. Vorzugsweise im Fall, dass die beiden Rohre bereits vorher miteinander vorzugsweise verbunden, vorzugsweise verlötet sind, muss durch das ganze erste Rohr gebohrt werden.

Vorzugsweise in einem inneren Winkel von 30 bis 60 Grad, bevorzugt von 40 bis 50 Grad, besonders bevorzugt in einem Winkel von 40 bis 45 Grad, bevorzugt 43 Grad, wobei der Winkel von einer horizontalen Linie, die durch den Durchmesser des unten liegenden Rohres geht, gemessen wird, wird vorzugsweise mit T-Stücken im Abstand von vorzugsweise 15 mm ein zweites Rohr an das erste Rohr mit einem Durchmesser von vorzugsweise 10 mm bis 30 mm, also vorzugsweise 10 mm, 11 mm, 12 mm, 13 mm, 14 mm, 15 mm, 16 mm, 17 mm, 18 mm, 19 mm, 20 mm, 20 mm, 21 mm, 22 mm, 23 mm, 24 mm, 25 mm, 26 mm, 27 mm, 28 mm, 29 mm, 30 mm, bevorzugt 15 mm bis 25 mm, besonders bevorzugt 20 bis 25 mm, ganz besonders 15 mm im Durchmesser Kupferrohr vollständig mit dem ersten vorzugsweise 18 mm, 19 mm, 20 mm, 21 mm, 22 mm dicken Rohrverbunden. Im hinteren Rohr, also dem zweiten Rohr bzw. Mauerrohr (vorzugsweise 15 mm Durchmesser), das zur Trocknung dient, wird vorzugsweise z.B. ein 10 Watt, 11 Watt, 12 Watt, 13 Watt, 14 Watt, 15 Watt, 16 Watt, 17 Watt, 18 Watt, 19 Watt, 20 Watt, 21 Watt, 22 Watt, 23 Watt vorzugsweise selbstregulierendes Heizband eingeschoben. Im vorderen Sockelrohr, dem Heizungsrohr (vorzugsweise 18 mm, 19 mm, 20 mm, 21 mm, 22 mm Durchmesser) wird vorzugsweise z.B. ein 30 Watt, 31 Watt, 32 Watt, 33 Watt, 34 Watt, 35 Watt Konstantheizkabel eingeschoben. Die Heizleistung wird in Abhängigkeit von dem Volumen der Rohre ausgewählt. Beide Heizkabel werden wasserdicht eingebaut und ebenso unmittelbar bei der Einschuböffnung auf 220 Volt wasserdicht eingebaut. Vorzugsweise ist noch eine Vorrichtung für einen Druckausgleich an zumindest einem Rohr vorhanden, wie vorzugsweise ein offenes Steigrohr oder vorzugsweise ein Druckausgleichsbehälter oder vorzugsweise ist das Rohr oder Rohrsystem nicht vollständig mit der wärmeleitenden Flüssigkeit gefüllt. Der Druckausgleich erfolgt bei zwei Rohren vorzugsweise über das obere Rohr. In einer Steigleitung (Unterputz oder Aufputz) werden die hauptstromführenden Kabel (z.B. dreipoliges Kabel 3 x 1,5 mm) auf Bedienhöhe an die Steuerung angeschlossen.

Eine bevorzugte Ausführungsform der Erfindung ist Trocknungssystem, das aus einem unteren Rohr, vorzugsweise aus Kupfer, vorzugsweise mit Klarlack lackiert, und ohmsche Heizung (Leistungsaufnahme vorzugsweise 30 Watt) aufweist sowie einem oberen Rohr vorzugsweise aus Kupfer, vorzugsweise mit Klarlack lackiert, und vorzugsweise einer ohmsche Heizung (Leistungsaufnahme vorzugsweise 10 Watt) aufweist, wobei der Durchmesser des oberen Rohrs vorzugsweise ein kleinerer Durchmesser wie der Durchmesser des unteren Rohr ist. Wobei die Rohre, vorzugsweise Kupferrohre, einen Durchmesser von vorzugsweise 10 mm bis 30 mm, also vorzugsweise 10 mm, 11 mm, 12 mm, 13 mm, 14 mm, 15 mm, 16 mm, 17 mm, 18 mm, 19 mm, 20 mm, 20 mm, 21 mm, 22 mm, 23 mm, 24 mm, 25 mm, 26 mm, 27 mm, 28 mm, 29 mm, 30 mm aufweisen. Die beiden Rohre sind jeweils über eine nach Außen abgedichtete, vorzugsweise verlötete Bohrung, die vorzugsweise deckungsgleich sind, wie oben beschrieben verbunden, ansonsten sind die beiden Rohre miteinander vorzugsweise verlötet.

Vorzugsweise die beiden Rohre, das obere Rohr, das untere Rohr oder beide Rohre, bevorzugt der Berührungsspalt der beiden Rohre weist vorzugsweise Fortsätze auf, die auch an einem oder beiden Rohren angebracht sein können, wobei die Fortsätze in Form von Hülsen, Rohren, die vorzugsweise hohl sind, die in Wärmeverbindung zum ersten Rohr stehen und in das Mauerwerk, ähnlich einem Dübel, herein ragen. Diese Fortsätze sind vorzugsweise aus dem gleichen Material wie das Rohr, das aus einem wärmeleitenden Metall wie vorzugsweise Aluminium, Stahl, Kupfer, bevorzugt Kupfer ist. Diese Fortsätze sind vorzugsweise alle 20 cm bis 45 cm, also vorzugsweise 20 cm, 21 cm, 22 cm, 23 cm, 24 cm, 25 cm, 26 cm, 27 cm, 28 cm, 29 cm, 30 cm, 31 cm, 32 cm, 33 cm, 34 cm, 35 cm, 36 cm, 37 cm, 38 cm, 39 cm, 40 cm, 41 cm, 42 cm, 43 cm, 44 cm, 45 cm, vorzugsweise vorhanden und vorzugsweise 1 cm bis 10 cm, also vorzugsweise 1 cm, 2 cm, 3 cm cm, 4 cm, 5 cm, 6 cm, 7 cm, 8 cm, 9 cm, 10 cm lang, bevorzugt 3 cm, 4 cm, 5 cm, 6 cm lang und haben einen Durchmesser von vorzugsweise 3 mm bis 15 mm, also vorzugsweise 3 mm, 4 mm, 5 mm, 6 mm, 7 mm, 8 mm, 9 mm, 10 mm, 11 mm, 12 mm, 13 mm, 14 mm, 15 mm, bevorzugt 8 mm. Diese Fortsätze sind wärmeleitende.

Das untere Rohr weist vorzugsweise eine wärmeleitende Flüssigkeit, wie unten beschrieben auf, während das obere Rohr vorzugsweise Silikagel mit einer Abmessung von 1 mm, 1,1 mm, 1,2 mm, 1,3 mm, 1,4 mm, 1,5 mm, 1,6 mm, 1,7 mm, 1,8 mm, 1,9 mm, 2 m, 2,1 mm, 2,2 mm, 2,3 mm, 2,4 mm, 2,5 mm, 2,6 mm, 2,7 mm, 2,8 mm, 2,9 mm, 3 mm etc. aufweist.

Beide Rohre sind vorzugsweise mit Abdeckblechen verkoffert, die sowohl oben als auch unten einen Spalt aufweisen, so dass ein Kamineffekt bei Erwärmung der Rohre auftritt, also eine Konvektion entsteht. Die Bleche sind vorzugsweise aus Metall, wie Aluminium, Stahl, Kupfer, wobei Kupfer bevorzugt ist.

Die wärmeleitende Flüssigkeit enthält vorzugsweise zumindest 0,1 Gew.% Kohlenstoff bis 7,5 Gew.%, vorzugsweise 0,1 Gew.%, 0,2 Gew.%, 0,3 Gew.%, 0,4 Gew.%, 0,5 Gew.%, 0,6 Gew.%, 0,7 Gew.%, 0,8 Gew.%, 0,9 Gew.%, 1 Gew.%, 1,5 Gew.%, 2 Gew.%, 2,5 Gew.%, 3 Gew.%, 3,5 Gew,%, 4 Gew.%, 4,5 Gew.%, 5 Gew.%, 5,5 Gew.%, 6 Gew.%, 6,5 Gew.%, 7 Gew.%, 7,5 Gew.% etc.. Die Grundlage der wärmeleitenden Flüssigkeit ist vorzugsweise Leitungswasser. Als Kohlenstoffquelle kann vorzugsweise Kohle, Holzkohle, Braunkohle, Steinkohle, Ruß und Graphit verwendet werden, die fein vermahlen in Leitungswasser suspendiert werden. Bevorzugt ist eine Kombination von Graphit und den anderen Kohlenstoffquellen, wie vorzugsweise Holzkohle, Braunkohle, Steinkohle, wobei Holzkohle bevorzugt ist. Bevorzugt ist ein Verhältnis von 1 Teil Graphit und 2 Teilen der anderen Kohlenstoffquellen. Es können auch Kupfersalze, wie Kupfersulfat, Magnesiumsalze, wie Magnesiumoxid, Calciumsalze, wie Calciumcarbonat, Aluminum, wie Aluminiumoxid, Zink, wie Zinkoxid, Titan, wie Titanoxid allein oder in beliebigen Mischungen mit den anderen Kohlenstoffquellen und/oder Graphit in Mengen von vorzugsweise 0,01 Gew.%, 0,02 Gew.%, 0,03 Gew.%, 0,04 Gew.%, 0,05 Gew.%, 0,06 Gew.%, 0,07 Gew.%, 0,08 Gew.%, 0,09 Gew.%, 0,1 Gew.%, 0,2 Gew.%, 0,3 Gew.%, 0,4 Gew.%, 0,5 Gew.%, 0,6 Gew.%, 0,7 Gew.%, 0,8 Gew.%, 0,9 Gew.%, 1 Gew.% etc. kombiniert werden.

Vorzugsweise werden der wärmeleitenden Flüssigkeit noch Biozide, wie antimikrobielle Substanzen zugegeben, wie kollidales Silber, vorzugsweise 1 mg/l bis 200 mg/l, also vorzugsweise 1 mg/l, 2 mg/l, 3 mg/l, 4 mg/l, 5 mg/l, 6 mg/l, 7 mg/l, 8 mg/l, 9 mg/l, 10 mg/l, 11 mg/l, 12 mg/l, 13 mg/l, 14 mg/l, 15 mg/l, 16 mg/l, 17 mg/l, 18 mg/l, 19 mg/l, 20 mg/l, 25 mg/l, 30 mg/l, 35 mg/l, 40 mg/l, 45 mg/l, 50 mg/l, 55 mg/l, 60 mg/l, 65 mg/l, 70 mg/l, 75 mg/l, 80 mg/l, 85 mg/l, 90 mg/l, 95 mg/l, 100 mg/l, 110 mg/l, 120 mg/l, 130 mg/l, 140 mg/l, 150 mg/l, 180 mg/l, 190 mg/l, 200 mg vorzugsweise 50 mg/l bis 200 mg/l, bevorzugt 10 mg/l bis 150 mg/l, besonders bevorzugt 100 mg/l im wässrigen Milieu. Es können auch andere Biozide, wie OBPA, OIT, DCOIT, BBIT, IPBC, Zink-Pyrithion, Triclosan verwendet werden. Kolloidales Silber wird vorzugsweise aus elementaren Silber oder in Wasser schwerlöslichen Silbersalzen hergestellt und hat eine Abmessung von vorzugsweise 1 nm bis 100 nm.

Zusätzlich kann noch Silikagel zugegeben werden, vorzugsweise 0,01 Gew.%, 0,02 Gew.%, 0,03 Gew.%, 0,04 Gew.%, 0,05 Gew.%, 0,06 Gew.%, 0,07 Gew.%, 0,08 Gew.%, 0,09 Gew.%, 0,1 Gew.%, 0,2 Gew.%, 0,3 Gew.%, 0,4 Gew.%, 0,5 Gew.%, 0,6 Gew.%, 0,7 Gew.%, 0,8 Gew.%, 0,9 Gew.%, 1 Gew.%, 1,1 Gew.% etc. in 0,1 Schritten bis 3 Gew.% Silikagel.

Über dem Rohr bzw. den Rohren ist vorzugsweise eine Krallmatte vorhanden, die vorzugsweise verputzt ist.

Durch diese Krallmatte wird der entstandene Warmluftauftrieb gespeichert. Die Krallmatte, die vorzugsweise verputzt ist, wird vorzugsweise auf eine Höhe von vorzugsweise 30 cm, 31 cm, 32 cm, 33 cm, 34 cm, 35 cm, 36 cm, 37 cm, 38 cm, 39 cm, 40 am, 41 cm, 42 cm, 43 cm, 44 cm, 45 cm, 46 cm, 47 cm, 48 cm, 49 cm, 50 cm, 51 cm, 52 cm, 53 cm, 54 cm, 55 cm über dem Fußboden angebracht. Diese Krallmatte bewirkt: 1.) Durch Kraftabkoppelung des Sichtputzes vom Mauerwerk - keine bzw. extrem starke Einschränkung von Schadsalzwanderung vom Mauerwerk in den Außenputz. 2.) Einen wärmespeichernden Luftzwischenraum (reine Strahlungswärme). Der Putz wird vorzugsweise in einer Dicke von ca. 0,3 bis 2 cm, also vorzugsweise 0,3 cm, 0,4 cm, 0,5 cm, 0,6 cm, 0,7 cm, 0,8 cm, 0,9 cm, 1 cm, 1,1 cm, 1,2 cm, 1,3 cm, 1,4 cm, 1,5 cm, 1,6 cm, 1,7 cm, 1,8 cm, 1,9 cm, 2 cm, bevorzugt 1 cm aufgetragene, wobei der spezielle Putz vorzugsweise mit Graphitstaub vermischt ist, um eine besserer Wärmespeicherung zu bewirken.

Die Krallmatte ist mit vorzugsweise einem faserverstärkten Ober- und Ausgleichsputz verputzt, mit folgenden technischen Daten:

Technische Daten Mörtelgruppe GP CS II gem. EN 998-1
Bindemittel gemäß DIN EN 459 und DIN EN 197-1
Körnung 0 - 1,2 mm
Festmörtelrohdichte ca. 1,30 kg/dm$^3$
Druckfestigkeit 1,5 - 5,0 N/mm$^2$
Kapillare Wasseraufnahme W 2
Wasserdampf- Diffusionswiderstandszahl $\mu$ < 15
Farbe vorzugsweise: altweiß
Wärmeleitfähigkeit: lambda 10 dry, mat 0,45 W(mk)für P 50 %
lambda 10 dry, mat 0,49 W (mk)für P 90 %

In diesen Putz wird noch vorzugsweise Graphit, vorzugsweise in einer Menge von 0,001 Gew., 0,002 Gew.%, 0,003 Gew.%, 0,004 Gew.%, 0,005 Gew.%, 0,006 Gew.%, 0,007 Gew.%, 0,008 Gew.%, 0,009 Gew.%, % 0,01 Gew.%, 0,02 Gew.%, 0,03 Gew.%, 0,04 Gew.%, 0,05 Gew.%, 0,06 Gew.%, 0,07 Gew.%, 0,08 Gew.%, 0,09 Gew.%, 0,1 Gew.%, 0,2 Gew.%, 0,3 Gew.%, 0,4 Gew.%, 0,5 Gew,%, 0,6 Gew.%, 0,7 Gew.%, 0,8 Gew.%, 0,9 Gew.%, 1 Gew.% etc. in 0,1 Gew.% Schritten bis vorzugsweise 5 Gew.%, eingemischt.

Als Farbe für die Krallmatte oder die Wand hinter dem Heizsystem wird vorzugsweise eine hochdiffusionsoffene Wandfarbe verwendet, die vorzugsweise 5 Gew.%, 6 Gew.%, 7 Gew.%, 8 Gew.%, 9 Gew.%, 10 Gew.%, 11 Gew.%, 12 Gew.%, 13 Gew.%, 14 Gew.%, 15 Gew.% Talk enthält.

Vorzugsweise werden der Wandfarbe noch Biozide, wie antimikrobielle Substanzen zugegeben, wie kollidales Silber, vorzugsweise 1 bis 200 mg/l, also vorzugsweise 1 mg/l, 2 mg/l, 3 mg/l, 4 mg/l, 5 mg/l, 6 mg/l, 7 mg/l, 8 mg/l, 9 mg/l, 10 mg/l, 11 mg/l, 12 mg/l, 13 mg/l, 14 mg/l, 15 mg/l, 16 mg/l, 17 mg/l, 18 mg/l, 19 mg/l, 20 mg/l, 25 mg/l, 30 mg/l, 35 mg/l, 40 mg/l, 45 mg/l, 50 mg/l, 55 mg/l, 60 mg/l, 65 mg/l, 70 mg/l, 75 mg/l, 80 mg/l, 85 mg/l, 90 mg/l, 95 mg/l, 100 mg/l, 110 mg/l, 120 mg/l, 130 mg/l, 140 mg/l, 150 mg/l, 180 mg/l, 190 mg/l, 200 mg, vorzugsweise 50 bis 200 mg/l, bevorzugt 10 bis 150 mg/l, besonders bevorzugt 100 mg/l im wässrigen Milieu. Es können auch andere Biozide, wie OBPA, OIT, DCOIT, BBIT, IFBC, Zink- Pyrithion, Triclosan verwendet werden.

Kolloidales Silber wird vorzugsweise aus elementaren Silber oder in Wasser schwerlöslichen Silbersalzen hergestellt und hat eine Abmessung von 1 bis 100 nm.

Die vorderen Einschuböffnungen (Heizkabel-Rohre) wurden mittels vorzugsweise Schrumpfschlauch oder bevorzugt eingepasste, abgedichtete Versorgungsanschlüsse abgedichtet. Am hinteren Ende des z.B. vorzugsweise 18 mm, 19 mm, 20 mm, 21 mm, 22 mm dicken Rohres wird als Druckausgleich ein z.B. vorzugsweise 15 mm Kupferrohr vertikal vorzugsweise ca. 4 cm oberhalb der Einschuböffnung angebracht (eventuell Unterputz). Ebenso dient als Druckausgleich der am z.B. vorzugsweise 18 mm, 19 mm, 20 mm, 21 mm, 22 mm dicken Kupferrohr angebrachte Schrumpfschlauch. Um eine eventuelle Trägheit des Systems abzuwenden, sollte das hintere Mauerrohr nicht eingeputzt werden (bewußter oder gewollter Wärmestau). Ferner dient dieser Wärmestau als gewollt und dient zur Unterbrechung der kapillarführenden Schicht. Bevorzugt werden

Beispiele

TESTSYSTEM vorzugsweise mit 15 mm Kupferrohr

Grundaufbau: In 230 ml Leitungswasser in einem Rohr von 87 cm Länge und 7 cm Durchmesser mit einer ohmschen Heizung bei konstant 30 Watt wird bei einer Anfangstemperatur von 19 °C das das Wärmeleitmedium 2 Stunden lang erwärmt. In den folgenden Beispielen werden die Stoffe mit Mengenangabe genannt, die in dem Leitungswasser suspendiert, bzw. gelöst werden und die Temperatur aufgeführt, die nach 2 Stunden erreicht wird.

Beispiel 1
Reines Leitungswasser 71,5 °
Beispiel 2

0,5 g Graphitpulver
0,5 g Kupfersulfat    75,3 °C

Beispiel 3

0,5g Silikagel (vermahlen im Mörser)
0,5 g Graphitpulver
0,5 g Kupfersulfat                73,2 °C

Beispiel 4

0,5 g Graphitpulver
1 g Holzkohle (vermählen im Mörser)   77,3 °C

Beispiel 5

3 g Holzkohle (vermahlen im Mörser)   73,0 °C

Beispiel 6

5 g Holzkohle (vermahlen im Mörser)     76,5 °C

Beispiel 7

8 g Holzkohle (vermahlen im Mörser)     74,6 °C

Messdaten:

Raumtemperatur ca. 14 Grad selbstregulierendes Kabel 27 Watt bei Volllast.

Die Messdaten bezüglich Temperatur und Watt wurden mit handelsüblichen Geräten der unteren Preiskategorie durchgeführt.

Mit diesem System mit dem jetzigen Wärmeträger bzw. Leiter kann mit einer kumulierten Wattaufnahme von vorzugsweise ca. 20 Watt eine Rohrtemperatur von ca. 42 Grad erreicht werden (Messungen bei ca. 14 Grad Raumtemperatur) . Bei Erwärmen der Mauer (zeitbezogen) und Erhöhung der Raumtemperatur auf ca. 20 Grad wird sich die Leistungsaufnahme von vorzugsweise ca. 20 Watt noch wesentlich verringern. Eine höhere Watteinstellung am vorderen Rohr würde im Umkehrsinn ergeben, dass die Mauerentfeuchtung sozusagen ohne zusätzliche Kosten mitläuft. Um in den Sommermonaten die kapillarbrechende Schicht (Mauerentfeuchtung) aufrecht zu erhalten, sollte die Mauerleitung (hinten) mit ca. 7 Watt betrieben werden. Dies ergebe eine Rohrtemperatur von ca. 28 Grad.

Der Einsatz von dem bereits beschriebenen flüssigen Medium hat folgendes ergeben: Beim Einsatz von normalem Leitungswasser (wie bei herkömmlicher Heizung): Beim Test an 3 gleichgroßen 15 mm Rohren mit Leitungswasser: ca. 43,6 Grad

mit Kohlestoffwasser: ca. 50,0 Grad

mit Kohlenstoffwasser, kolloidalem Silber, Silikagel: ca. 52,2 Grad

Als Steuerung wird im Moment eine handelsübliche Dimmerregelung verwendet.

Temperaturen am System

hinten mit ca. 12 Watt Einstellung

vorne mit ca. 7 Watt Einstellung

ergab eine Temperatur von 41,5 Grad am hinteren Bohr. Eine Erhöhung von 2 - 3 Grad sind möglich.

Mit kohlenstoffhaltigem Wasser und Silikagel mit benannter Mischung wird eine bis zu 6 Grad höhere Endtemperatur erreicht, als mit bei gleicher Einstellung normalem Leitungswasser.

Messungsbeispiel

Am Heizungsrohr (vorne vorzugsweise 18 mm, 19 mm, 20 mm, 21 mm, 22 mm Durchmesser) wurde das 30 Watt Konstantheizkabel, am Dimmer auf 10 Watt Aufnahmeleistung eingestellt.

Am Mauerentfeuchtungsrohr (Trocknungsrohr Hinten 15 mm Durchmesser) wurde das 23 Watt selbstregulierende Heizkabel auf 8 Watt eingestellt.

Nach ca. 2,5 Stunden ergab sich eine Temperatur am gesamten System bei einer Raumtemperatur von 18 °. "kumulierte" = Temperatur von 45, 3 °.

Spreizung: Hinten 45,7 °

Vorne 45,3 ° bedeutet eine Differenz von 0,4 °

Als Beispiel:

Erfahrungswerte von anderen Firmen auch Architektur- bzw. Ingenieursbüros bestätigten:

Dass mit einer Vorlauftemperatur von 45° im Winter wie z. B. 2013/14 mit diesem System (Strahlungswärme)zu Bewerkstelligen sei.

Als weiteres Beispiel zu den "Unterhaltskosten":

Ein Haus (Bungalow) mit z. B. 10 x 10 m Wohnungsfläche ca. 95 cm$^2$ (Bauweise aus den 90er Jahren) mit ca. 30 laufendem Meter an Rohren.

System:

| Nennwert: 18 | Watt/ laufender Meter |
|---|---|
| Einschaltzeit: | 24 Std. |
| Strompreis: | 20 Cent/kwh - Heizstrompreis? |

| =158 kwh | = 31,54 Euro pro Jahr/ laufender Mater |
|---|---|

| Nennwert: | 15 Watt/ laufender Meter. |
|---|---|
| Einschaltzeit: | 24 Std. |
| Strompreis: | 20 Cent/kwh Heizstrompreis? |

= 26,62 Euro pro Jahr/ laufender Meter

Bei angenommen 7 Monaten Heizungszeit, davon:

ca. 3 Monaten = Hauptwinter mit 18 Watt/ laufender Meter

ca. 4 Monaten = "Übergangszeit" mit 15 Watt/ laufender Meter

Berechnung:

3 Monate mit 18 Watt 31,54 Euro x 30 laufender Meter = 946, 20/Jahr 946,20/Jahr : 12 = 78,85 Euro/Monat x 3 Monate = 236,55 Euro

```
4 Monate mit 15 Watt = 65,70 Euro/Monat x 4 Monate =

262,80 Euro


        236,55 + 262,80 = 499,32 Euro
```

5 Monate mit 7 Watt Mauerwerksentfeuchtung (Rohr in der Mauer) auf ca. 28° Rohrtemperatur = 153,25 Euro
Ergebnis: Mit einer Photovoltaikanlage mit ca. 1,5 kW (Anschaffungskosten, ca. 3500 Euro) könnten die 5 monatlichen Betriebskosten wegfallen.
Überschussberechnung der Photor-Anlage auf Gesamtbetriebskosten! Einsparung von ca. 30%

Figur 1

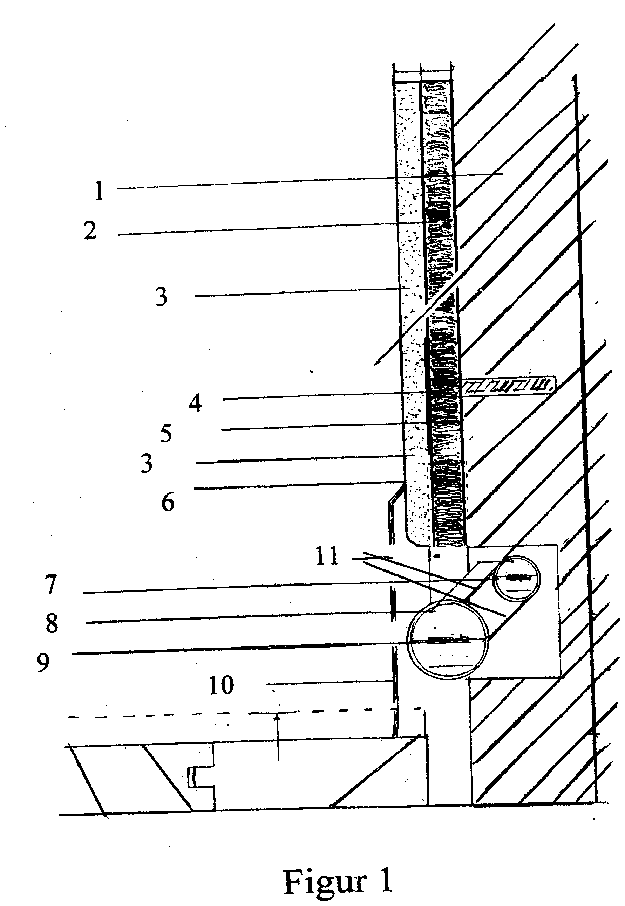

Figur 1 zeigt das erfindungsgemäße Trocknungssystem. An einer Mauer 1 ist ein Krallgewebe 2 mit einem Schlagdübel 4 befestigt, das Glas aufweist oder mit Putz 3 verputzt ist, wobei zwischen Putz 3 und Krallgewebe 2 noch ein zusätzliches Gewebe 5 sein kann. Dieser Putz weist eine Farbe 6 auf. Darunter ist innerhalb des Mauerwerks das im Durchmesser kleiner Rohr 7 zu sehen, das zur Trocknung des Mauerwerks dient und darunter, das im Durchmesser größere Rohr 9 mit der Wärmeleitflüssigkeit 8 zu sehen, das außerhalb des Mauerwerks ist und Verbindungsrohre 11, die das Heizrohr 9 mit dem Trocknungsrohr 7 verbinden. Darunter ist der Bodensockel 10 zu sehen.
Figur 2

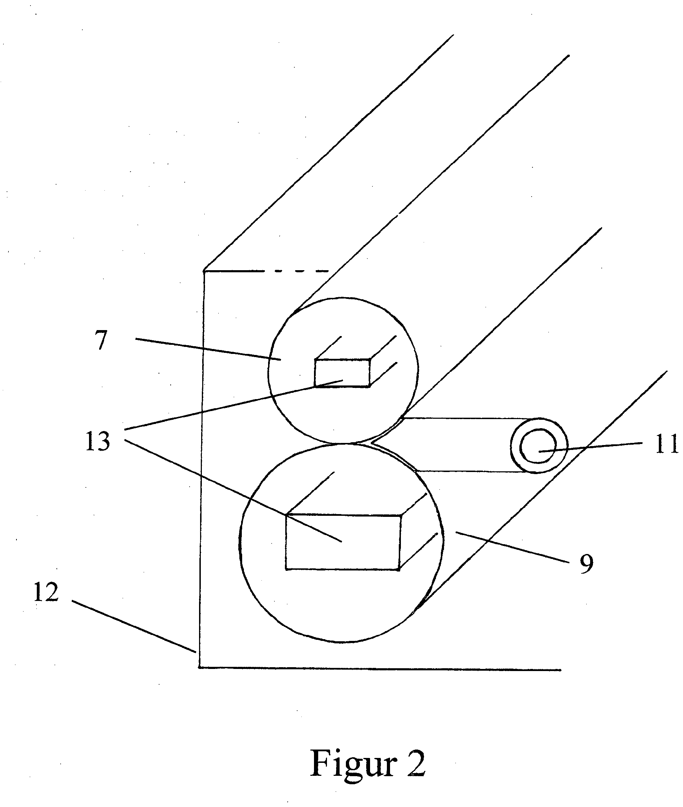

Figur 2 zeigt das erfindungsgemäße Trocknungssystem, das ein oberes Rohr mit geringerem Durchmesser 7 und ein unteres Rohr 9 mit größerem Durchmesser aufweist. Zwischen den Rohren ist einer der erfindungsgemäßen wärmeleitenden Fortsätze 11 zu sehen. Um die Rohre ist die Verkofferung 12 zu sehen und bei den Rohren 7 und 9 die Anschlüsse 13.

**Patentansprüche**

1. Trocknungssystem, das zumindest ein erstes Rohr (9) aufweist, das einen Heizdraht in Form einer ohmschen Heizung und eine wärmeleitende Flüssigkeit aufweist, wobei das erste Rohr (9) weiterhin in ein Mauerwerk (1) einbringbare Fortsätze (11) in Form von Hülsen oder Rohren aufweist, die zum Trocknen des Mauerwerks (1) vorgesehen sind und die in Wärmeverbindung zumindest mit dem ersten Rohr (9) stehen.

2. Trocknungssystem nach Anspruch 1, **dadurch gekennzeichnet, dass** an das erste Rohr (9) ein weiteres zweites Rohr (7) parallel in Gasverbindung, Flüssigkeitsverbindung angeschlossen ist, das ebenfalls einen Heizdraht in Form einer ohmschen Heizung und eine wärmeleitende Flüssigkeit aufweist.

3. Trocknungssystem nach Anspruch 2, **dadurch gekennzeichnet, dass** an das erste Rohr (9) das zweite Rohr (7) parallel über zumindest zwei Verbindungsrohre angeschlossen ist.

4. Trocknungssystem nach einem der vorangehenden Ansprüche, **dadurch gekennzeichnet, dass** das erste Rohr (9) oder das erste und das zweite Rohr (7, 9) gerade sind.

5. Trocknungssystem nach einem der vorangehenden Ansprüche, **dadurch gekennzeichnet, dass** die wärmeleitende Flüssigkeit 0,1 Gew.% Kohlenstoff bis 7,5 Gew.%, Kohlenstoff enthält.

6. Trocknungssystem nach einem der vorangehenden Ansprüche, **dadurch gekennzeichnet, dass** die die wärmeleitende Flüssigkeit eine antimikrobielle Substanz und vorzugsweise Silikagel enthält.

7. Trocknungssystem nach einem der vorangehenden Ansprüche, **dadurch gekennzeichnet, dass** die wärmeleitende Flüssigkeit als antimikrobielle Substanz kolloidales Silber enthält.

8. Trocknungssystem nach Anspruch 5, **dadurch gekennzeichnet, dass** der Kohlenstoff in Form von Holzkohle oder Holzkohle und Graphit vorliegt.

9. Trocknungssystem nach einem der Ansprüche 2 bis 8, **dadurch gekennzeichnet, dass** das zweite Rohr (7) über dem ersten Rohr (9) parallel über die zumindest zwei Verbindungsrohre angeschlossen ist.

10. Trocknungssystem nach einem der Ansprüche 2 oder 4 bis 8, **dadurch gekennzeichnet, dass** das zweite Rohr (7) über dem ersten Rohr (9) parallel über zumindest zwei deckungsgleiche Bohrungen angeschlossen ist.

11. Trocknungssystem nach einem der Ansprüche 2 bis 10, **dadurch gekennzeichnet, dass** das erste Rohr (9) und/oder das zweite Rohr (7) oberhalb einer Oberkante eines Fußbodens oder unterhalb eines Fensters oder eines Glaselementes an den Mauerwerk (1) angeordnet sind.

12. Trocknungssystem nach einem der Ansprüche 2 bis 11, **dadurch gekennzeichnet, dass** die Fortsätze (11) mit dem ersten Rohr (9) und mit dem zweiten Rohr (7) wärmeleitend verbunden sind.

**Claims**

1. Drying system comprising at least one first tube (9) comprising a heating wire in the form of an ohmic heater and a heat-conducting liquid, the first tube further comprising extensions (11) in the form of sleeves or tubes which can be introduced into a masonry (1) and which are provided for drying the masonry and which are in heat connection at least with the first tube, **characterized in that** the projections in the form of sleeves or tubes are provided for drying the masonry and which are in heat connection at least with the first tube.

2. Drying system according to claim 1, **characterized in that** a further second tube (7) is connected in parallel to the first tube (9) in gas connection, liquid connection, which also has a heating wire in the form of an ohmic heater and a heat-conducting liquid

3. Drying system according to claim 2, **characterized in that** the second pipe (7) is connected in parallel to the first pipe (9) via at least two connecting pipes

4. Drying system according to one of the preceding claims, **characterized in that** the first tube (9) or the first and second tubes (7, 9) are straight.

5. Drying system according to any of the foregoing claims, **characterized in that** the heat-conductive liquid comprises 0.1 weight proportion in %, carbon to 7.5 weight proportion in %, carbon

6. Drying system according to one of the preceding claims, **characterized in that** the heat-conducting liquid contains an antimicrobial substance and preferably silicates.

7. Drying system according to one of the preceding claims, **characterized in that** the heat-conducting liquid contains an antimicrobial substance colloidal silver.

8. Drying system according to claim 5, **characterized in that** the carbon is in the form of charcoal or charcoal and graphite.

9. Drying system according to claim 2 to 8, **characterized in that** a further second tube (7) is connected in parallel in gas connection, liquid connection, which likewise has a heating wire in the form of an ohmic heater and a heat-conducting liquid, to the first tube (9).

10. Drying system according to one of claims 2 or 4 to 8, **characterized in that** the second pipe (7) is connected in parallel above the first pipe (9) via at least two congruent bores

11. Drying system according to one of claims 2 or to 10, **characterized in that** the first pipe (9) and/or the second pipe (7) are arranged above a floor or below a window or a glass element on the masonry (1)

12. Drying system according to one of claims 2 or to 11, **characterized in that** the extensions (11) are thermally conductively connected to the first tube (9) and to the second tube (7)

**Revendications**

1. Système de séchage comprenant au moins un premier tube (9) comprenant un fil chauffant sous la forme d'un chauffage ohmique et un liquide conducteur de chaleur, dans lequel le premier tube (9) comprend en outre des extensions (11) sous la forme de manchons ou tubes qui peuvent être introduits dans une maçonnerie (1), sont prévus pour sécher la maçonnerie (1) et sont en connexion thermique au moins avec le premier tube (9)

2. Système de séchage selon la revendication 1, **caractérisé en ce qu'**un deuxième tube supplémentaire (7) est raccordé au premier tube (9) en parallèle en connexion gazeuse, en connexion liquide et en connexion liquide et comporte également un fil chauffant sous la forme d'un chauffage ohmique et un liquide conducteur de chaleur.

3. Système de séchage selon la revendication 2, **caractérisé en ce que** le deuxième tube (7) est relié en parallèle au premier tube (9) par au moins deux tubes de raccordement.

4. Système de séchage selon l'une des revendications précédentes, **caractérisé en ce que** le premier tube (9) ou les premier et second tubes (7, 9) sont droits.

5. Système de séchage selon l'une des revendications précédentes, **caractérisé en ce que** le liquide conducteur de chaleur contient 0,1 % en poids de carbone à 7,5% en poids de carbone.

6. Système de séchage selon l'une des revendications précédentes, **caractérisé en ce que** le liquide conducteur de chaleur contient une substance antimicrobienne et de préférence du gel de silice.

7. Système de séchage selon l'une des revendications précédentes, **caractérisé en ce que** le liquide conducteur de chaleur contient de l'argent colloïdal comme substance antimicrobienne.

8. Système de séchage selon la revendication 5, **caractérisé en ce que** le carbone se présente sous forme de charbon de bois ou de charbon de bois et de graphite.

9. Système de séchage selon l'une des revendications 2 à 8, **caractérisé en ce que** le deuxième tube (7) par-dessus le premier tube (9) est raccordé en parallèle par au moins deux tubes de liaison.

**10.** Système de séchage selon l'une des revendications 2 ou 4 à 8, **caractérisé en ce que** le deuxième tube (7) par-dessus le premier tube (9) est raccordé en parallèle par au moins deux alésages congruents

**11.** Système de séchage selon l'une des revendications 2 à 10, **caractérisé en ce que** le premier tube (9) et/ou le deuxième tube (7) sont disposés au-dessus d'un bord supérieur d'un plancher ou au-dessous d'une fenêtre ou d'un élément en verre sur la maçonnerie (1).

**12.** Système de séchage selon l'une des revendications 2 à 11, **caractérisé en ce que** les extensions (11) sont reliées par conduction thermique au premier tube (9) et au second tube (7).

Figur 1

Figur 2

**IN DER BESCHREIBUNG AUFGEFÜHRTE DOKUMENTE**

**In der Beschreibung aufgeführte Patentdokumente**

- DE 4008604 A1
- DE 102010052294 A1
- DE 1806709 U